# EUROPÄISCHE PATENTANMELDUNG

(11) **EP 1 658 824 A2**
(43) Veröffentlichungstag der Anmeldung: **24.05.2006**
(21) Anmeldenummer: 04027361.7
(22) Anmeldetag: 18.11.2004
(51) Int. Cl.: A61C 8/00, A61F 2/28

(54) **Stützkegelstumpf zur Anwendung bei einer Sinusmembranelevation zur Vorbereitung der Insertion eines Dentalimplantats**

(71) Anmelder: Ebenberger, Johann, 5020 Salzburg (AT)
(72) Erfinder: Ebenberger, Johann, 5020 Salzburg (AT)
(74) Vertreter: Neubauer, Hans-Jürgen

(57) **Zusammenfassung**

Die Erfindung betrifft ein Erzeugnis zur Anwendung bei einer den Knochenaufbau an einem Oberkieferknochen fördernden Sinusmembranelevation zur Vorbereitung der Insertion eines Dentalimplantats. Das Erzeugnis ist ein Sinusmembranelevation-Stützkegelstumpf (1) als gerader Kreiskegelstumpf, zur temporären Abstützung der elevierten Sinusmembran (20), während der Zeit des unter der elevierten Sinusmembran (20) und um den Stützkegelstumpf (1) herum erfolgenden Knochenaufbaus. Der Stützkegelstumpf (1) hat eine Länge (L1) oder Länge mit geringem Übermaß (L4) entsprechend der Knocheninsertionstiefe (L2) eines Implantats (2), und einen Durchmesser (d1) oder Durchmesser mit geringem Untermaß entsprechend dem Einsatzdurchmesser (d4) eines Implantats (2). Der Kegelwinkel α zwischen der Kegelhöhe (3) und dem Kegelmantel (4) liegt in einem Bereich zwischen 0,3° und 7°, bevorzugt zwischen 0,5° und 2°. Die Kegelstumpfoberseite (13) weist gerundete Kanten (15) am Übergang zum Kegelmantel (4) auf, und die Kegelstumpfoberfläche (4) ist glatt in einem Rauhigkeitsbereich von maschiniert bis poliert ausgeführt. Zudem ist als Erzeugnis ein Set aus dem vorstehenden Sinusmembran-Stützkegelstumpf und einem Implantat (2) beansprucht.

## Beschreibung

Die Erfindung betrifft ein Erzeugnis zur Anwendung bei einer Sinusmembranelevation zur Vorbereitung der Insertion eines Dentalimplantats nach dem Oberbegriff des Anspruchs 1 bzw. des Anspruchs 6.

Eine erfolgreiche Behandlung und Versorgung eines Patienten mit einem Dentalimplantat setzt ein Mindestmaß eines knöchernen Implantatlagers voraus. Ein optimales Implantatlager steht sowohl in Bezug auf das Knochenvolumen als auch in Bezug auf die Knochenqualität nicht immer zur Verfügung. Zudem sollte das Implantat nicht nach dem vorliegenden Knochenangebot sondern nach funktionellen und ästhetischen Gesichtspunkten der späteren prothetischen Versorgung positioniert werden. Dies hat zur Folge, dass in der modernen Implantologie häufig augmentiert werden muss, um eine optimale Implantationspositionierung mit ausreichendem Knochenangebot zu erreichen. Insbesondere führt der Verlust der Oberkieferseitenzähne zu einem Knochenabbau, so dass hier das Problem eines ungenügenden Knochenangebots für eine optimale Implantatspositionierung relativ häufig vorliegt. Bei einem Knochenangebot von weniger als ca. 6 mm unterhalb der Kieferhöhle ist hier eine Knochenrekonstruktion vor der Insertion eines Implantats indiziert. Dazu sind bereits mehr oder weniger invasive operative Techniken für die Behandlung bei begrenztem Knochenangebot vorgeschlagen worden.

Bei einer bekannten Technik wird in den Oberkieferknochen von buccal eine Öffnung eingebracht, in die ein autogener Knochen (mit oder ohne resorbierbarem Biomaterial) eingeführt und dadurch die Sinusmembran so weit angehoben wird, bis die erforderliche Höhe des subsinuidalen Knochens erreicht wird. Die Insertion eines Implantats kann dann nach der vollständigen Knochenheilung vorgenommen werden. Diese Technik in Verbindung mit einer Gewinnung eines Knochenimplantats aus dem Hüftkamm führt zu einer großen Belastung des Patienten.

Bei einer anderen Technik, die für einen Patienten weniger belastend ist, wird die Knochenschicht des Oberkiefers penetriert und die Bohrung etwa 1 mm unterhalb des Sinusbodens im Knochen beendet. Anschließend wird in die Bohrung ein Osteotom eingeführt, mit dem die noch vorhandene 1 mm starke Knochenschicht des Sinusbodens frakturiert wird. Zudem wird granuliertes Knochentransplantat fortschreitend in Verbindung mit einer Sinusmembranelevation in den Sinus kondensiert. Ein Implantat kann je nach den Gegebenheiten in der gleichen Sitzung oder zeitverzögert gesetzt werden, wobei für eine erfolgreiche Behandlung eine ausreichende Primärstabilität gewährleistet sein muss (Internationales Journal für Paradontologie und restaurative Zahnheilkunde, 21. Jahrgang, Nummer 6, Dezember 2001). Das verwendete Knochentransplantat enthält regelmäßig in größerem Umfang auch nicht autogene Bestandteile, die zu Belastungen und zu Behandlungsverzögerungen führen können.

Aufgabe der vorliegenden Erfindung ist es, ein Erzeugnis zur Anwendung bei einer den Knochenaufbau an einem Oberkieferknochen fördernden Sinusmembranelevation zur Vorbereitung und Insertion eines Dentalimplantats vorzuschlagen. Diese Aufgabe wird mit den Merkmalen des Anspruchs 1 gelöst.

Gemäß Anspruch 1 ist das Erzeugnis ein Sinusmembranelevation-Stützkegelstumpf als gerader Kreiskegelstumpf zur temporären Abstützung der elevierten Sinusmembran, während der Zeit des unter der elevierten Sinusmembran und um den Stützkegelstumpf herum erfolgenden Knochenaufbaus, bis zur Insertion des Dentalimplantats.

Der Stützkegelstumpf hat eine Länge entsprechend der Knocheninsertionstiefe eines Implantats oder eine Länge mit geringem Übermaß entsprechend dieser Knocheninsertionstiefe, wobei dieses Übermaß weniger als 20 %, bevorzugt weniger als 10 % der Knocheninsertionstiefe eines Implantats sein soll.

Der Kegelstumpfboden weist einen Durchmesser entsprechend dem Einsatzdurchmesser eines Implantats auf, wobei als Einsatzdurchmesser bei einem Schraubimplantat der Durchmesser ohne den radialen Überstand der Gewindegänge verstanden wird. Je nach den Gegebenheiten kann der Durchmesser auch ein geringes Untermaß im Vergleich zu diesem Einsatzdurchmesser aufweisen, wobei das Untermaß weniger als 10 % des Einsatzdurchmessers betragen soll.

Der Kegelwinkel α zwischen der Kegelhöhe und dem Kegelmantel liegt in einem Bereich zwischen 0,3° und 7° bevorzugt zwischen 0,5° und 2°, so dass es sich um einen relativ schlanken nahezu zylindrischen geformten Kegelstumpf handelt.

Die Kegelstumpfoberseite weist gerundete Kanten am Übergang zum Kegelmantel auf.

Die Kegelstumpfoberfläche ist glatt mit einem Rauhigkeitsbereich von maschiniert, d. h. fein abgedreht, bis poliert.

Die vorstehenden Gestaltungsmerkmale des Sinusmembranelevation-Stützkegelstumpfs dienen einerseits der Sinusmembranelevation und der Abstützung der elevierten Sinusmembran und andererseits der möglichst problemlosen Entfernung des Stützkegelstumpfs aus dem aufgebauten Knochen vor der Insertion eines Dentalimplantats:

Bei einem ungenügenden Knochenangebot für ein Dentalimplantat wird vor der Einbringung des Stützkegelstumpfs im Oberkiefer ein Knochenhautlappen abgelöst und aufgeklappt und eine Bohrung bis etwa 1 mm vor den Sinusboden eingebracht. Mittels Osteotomtechnik wird die verbliebene dünne Knochenschicht frakturiert und die gewünschte Sinusmembranelevation durchgeführt. Anschließend wird der Stützkegelstumpf zur Abstützung der elevierten Sinusmembran eingesetzt. Da der Kegel mit einem kleinen Kegelwinkel schlank ausgeführt ist, ergibt sich eine relativ große Kegelstumpfoberseite mit einer vorteilhaft großen Anlagefläche zur Sinusmembran, was einer Verletzung und einem Durchstoßen der Sinusmembran entgegenwirkt. Zudem wird durch die Kegelstumpfoberseite mit ihren gerundeten Kanten am Übergang zum Kegelmantel eine Verletzung der Sinusmembran verhindert.

Nach dem vorstehenden Einsetzen des Stützkegelstumpfs wird der aufgeklappte Knochenhautlappen über den Kegelstumpfboden gezogen und angenäht, so dass der Stützkegelstumpf in der Bohrung gegen ein Herausfallen gesichert und fixiert ist. Bei der Sinusmembranelevation bildet sich um den Stützkegelstumpf ein Volumen, welches mit kondensierendem Blut vollläuft und das frakturierte Knochenplättchen aufnimmt. In einem Zeitraum von ca. 5 Monaten erfolgt in diesem Volumen um den Stützkegelstumpf herum und unter der elevierten Sinusmembran die gewünschte Knochenbildung.

Zur Vorbereitung der Insertion des Implantats in den so augmentierten Oberkieferknochen ist es erforderlich, den Stützkegelstumpf wieder herauszunehmen und zu entfernen. Diese Herausnahme soll mit möglichst geringer Beeinträchtigung des aufgebauten Knochens und/oder der angrenzenden Sinusmembran erfolgen. Dazu dient die glatte Kegelstumpfoberfläche, die ein Einwachsen des aufgebauten Knochens in die Oberflächenstruktur und damit Ablöseprobleme verhindert. Je glatter diese Oberfläche ausgeführt ist umso einfacher stellt sich der Ablösevorgang vom Knochen dar. Keinesfalls darf die Kegelstumpfoberfläche, wie bei einer Vielzahl von Implantaten bekannt, mit einer Mikrostruktur ausgerüstet sein sondern soll eine osseointegrationshindernde Oberfläche aufweisen. Zudem bewirkt die Kegelform, dass sich nach einer initialen Ablösung der Stützkegelstumpf von seinen Anlageflächen im Knochen löst und sich dann nahezu kraftfrei herausnehmen lässt.

Ein besonderer Vorteil des Stützkegelstumpfs besteht darin, dass nach dessen Herausnahme bereits die sonst kompliziert herzustellende Pilotbohrung für ein Implantat geschaffen ist, wobei insbesondere die Insertionsrichtung und die Insertionstiefe für das Implantat bereits vorgegeben sind. Die Länge des Stützkegelstumpfs oder eine Länge mit geringem Übermaß entsprechend der Knocheninsertionstiefe eines Implantats stellt sicher, dass das Implantat im Knochenbereich aufgenommen wird und bei der Insertion keine Verletzung der Sinusmembran mit einem eventuellen Durchstoßen in die Kieferhöhle erfolgt.

Da der Kegelstumpfboden einen Durchmesser oder Durchmesser mit geringem Untermaß entsprechend dem Einsatzdurchmesser eines Implantats aufweist, ist es für die Insertion des Implantats nur noch erforderlich den Durchmesser entsprechend dem Einsatzdurchmesser geringfügig über die gesamte Länge nachzuarbeiten.

Die Implantatinsertion ist somit einfach und in kurzer Zeit mit geringer Belastung des Patienten als kostendämpfende Maßnahme durchführbar.

Mit den Merkmalen des Anspruchs 2 wird am Kegelstumpfboden ein umlaufender Anlagebund mit bestimmter, vorzugsweise geringer Bundbreite und geringer Bundhöhe vorgeschlagen, der in Verbindung mit der Überdeckung durch den Knochenhautlappen der primären Fixierung des Stützkegelstumpfs in der Bohrung nach dem Einsetzen dient.

In einer besonders bevorzugten Weiterbildung nach Anspruch 3 ist zentral im Kegelstumpfboden ein axial ausgerichteter Werkzeugansatz, bevorzugt ein Inbusschlüsselansatz eingelassen. Über diesen Werkzeugansatz kann auf den Stützkegelstumpf zu dessen Ablösung vor der Herausnahme ein Losbrechdrehmoment mit einer kurzzeitigen Lastspitze aufgebracht werden. Dadurch kann der Stützkegelstumpf ohne Beschädigung der Gegenanlageflächen von diesen abgelöst und dann einfach herausgenommen werden.

In einer weiteren Ausgestaltung nach Anspruch 4 kann je nach den Gegebenheiten an der Kegelstumpfoberseite eine diese schirmförmig radial überragende Stützscheibe befestigt sein. Diese Befestigung kann insbesondere durch Klebung oder mittels einer Rastverbindung erfolgen. Eine solche Stützscheibe kann je nach den Gegebenheiten die Anlagefläche bei der Sinusmembranelevation vergrößern und in Verbindung mit ihrer Elastizität punktuelle Belastungen der Sinusmembran reduzieren und somit deren Verletzung entgegenwirken. Eine solche Stützscheibe soll aus einer resorbierbaren Membran hergestellt sein.

Geeignete Materialien für den Stützkegelstumpf sind nach Anspruch 5 insbesondere Titan und/oder Edelstahl und/oder Keramik, wobei die Oberfläche zumindest teilweise auch teflonbeschichtet sein kann.

Mit den Merkmalen des Anspruchs 6 wird ein Set beansprucht, bestehend aus einem Implantat als Schraub- oder Steckimplantat mit einer vorgegebenen Knocheninsertionstiefe sowie einem vorgegebenen Einsatzdurchmesser. Das Set umfasst weiter einen Sinusmembranelevation-Stützkegelstumpf mit den Gestaltungsmerkmalen, wie sie in Verbindung mit Anspruch 1 beansprucht und vorstehend erläutert sind.

Die Gestaltungsmerkmale nach den Ansprüchen 7 und 8 betreffen weiter den Sinusmembranelevation-Stützkegelstumpf entsprechend der Merkmale der Ansprüche 2 bis 4 sowie Anspruch 5, wie sie ebenfalls vorstehend erläutert sind.

Als bevorzugte Ausführungsform enthält das Set ein Implantat als Schraubimplantat in der Art eines Primärteils, bei dem der Bereich, der für die Knocheninsertion bestimmt ist, eine Zylinderform aufweist. Die Zylinderform ist endseitig halbkugelförmig abgerundet und trägt einen selbstschneidenden Gewindegang. Zudem ist diese Zylinderform im Bereich der Knocheninsertionstiefe mit einer Mikrostruktur versehen. Der daran anschließende Bereich steht am Knochen über und ist mit glatter Oberfläche konisch erweitert. Stirnseitig ist zudem ein zentrales Innengewinde angebracht, für die Befestigung eines einschraubbaren Sekundärteils als Träger für eine Zahnkrone oder eine andere Suprakonstruktion.

Ein Set mit einem Sinusmembranelevation-Stützkegelstumpf in Verbindung mit dem vorstehenden Schraubimplantat entsprechend der vorstehenden Ausführungen ist besonders gut zur Anwendung und Lösung von Problemen bei Implantationen an Positionen mit geringem Knochenangebot im Oberkieferseitenzahnbereich geeignet.

Dabei soll der Stützkegelstumpf nach Anspruch 10 als Wegwerfteil konzipiert sein, während das Implantat aus dem Set für den Langzeitverbleib im Kieferknochen bestimmt ist.

Anhand einer Zeichnung wird die Erfindung näher erläutert.

Es zeigen:
- Fig. 1: eine Seitenansicht eines Stützkegelstumpfs,
- Fig. 2: eine Seitenansicht eines zugeordneten Schraubimplantats,
- Fig. 3: eine Draufsicht auf den Stützkegelstumpf nach Fig. 1,
- Fig. 4: eine Draufsicht auf den Schnitt entlang der Linie A-A aus Fig. 2,
- Fig. 5 - 9: schematische Darstellungen für die Anwendungen des Stützkegelstumpfs und des Schraubimplantats in Verbindung mit einer Sinusmembranelevation zur Vorbereitung und zur Insertion des Schraubimplantats.

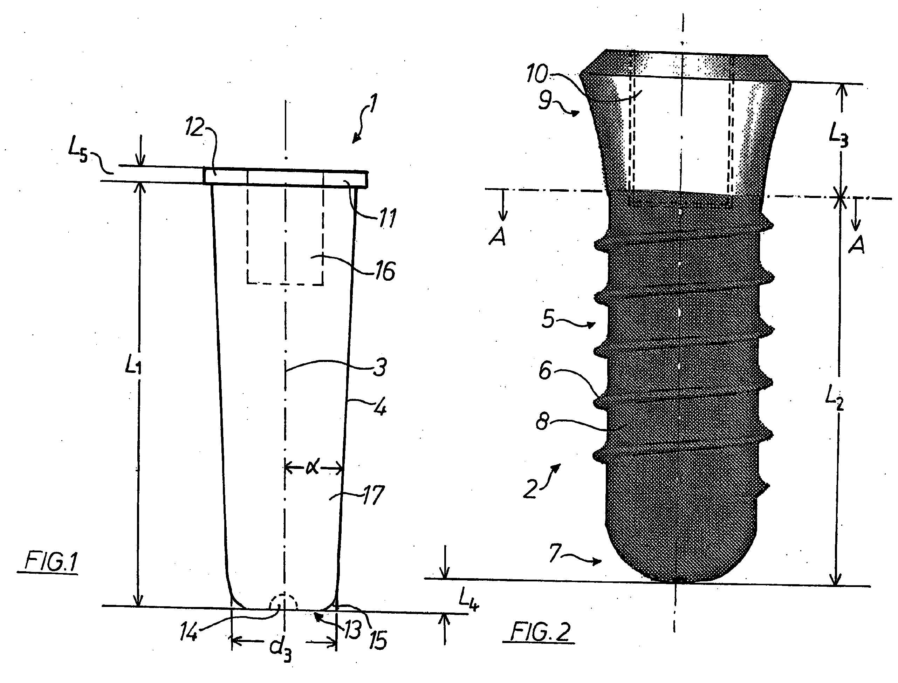

In Fig. 1 ist ein Sinusmembranelevation-Stützkegelstumpf 1 und in Fig. 2 ein zugeordnetes Schraubimplantat 2 gezeigt.

Der Stützkegelstumpf 1 weist einen Kegelwinkel α zwischen der Kegelhöhe 3 und dem Kegelmantel 4 von ca. 1° auf.

Die Kegelstumpflänge L1 beträgt in der konkret dargestellten Ausführungsform 11 mm und ist der Knocheninsertionstiefe L2 mit 10 mm insofern angepasst, wobei die Kegelstumpflänge L1 lediglich um das geringe Übermaß L4 von 1 mm länger ist als die Knocheninsertionstiefe L2 des Schraubimplantats 2 ist.

Das Schraubimplantat 2 hat im Bereich der Knocheninsertionstiefe L2 eine Zylinderform 5, die einen Gewindegang 6 trägt und die endseitig eine halbkugelförmige Zylinderendabrundung 7 aufweist. Im Bereich der Knocheninsertionstiefe L2 ist das Schraubimplantat 2 an der Oberfläche mit einer Mikrostruktur 8 versehen. Der an die Zylinderform 5 anschließende Bereich 9, der als Knochenüberstand mit einer Länge L3 von 2,8 mm vorgesehen ist, weist eine glatte Oberfläche auf und ist konisch erweitert.

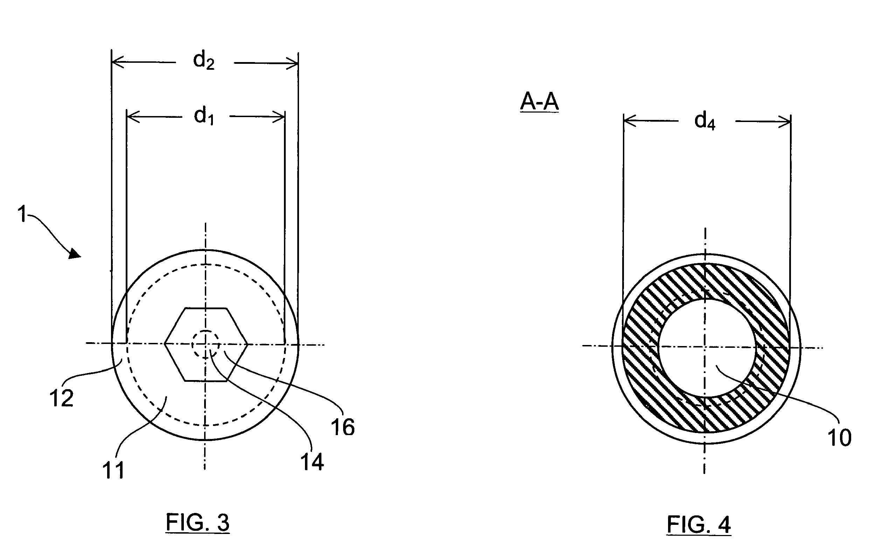

In Verbindung mit den Draufsichten nach den Fig. 3 und 4 ist ersichtlich, dass das Schraubimplantat 2 ein zentrales Innengewinde 10 für die Befestigung eines einschraubbaren (nicht dargestellten) Sekundärteils als Träger für eine Zahnkrone oder eine andere Suprakonstruktion aufweist. Es sind auch andere und modifizierte Anschlusstechniken für Sekundärteile, insbesondere für geeignete Winkelstellungen bekannt.

Der Kegelboden des Stützkegelstumpfs 1 hat einen Durchmesser d1 von 3,8 mm. Der Durchmesser d1 ist dem Einsatzdurchmesser (ohne Gewindegang) d4 von 4,1 mm des Schraubimplantats 2 angepasst mit einem geringen Untermaß von 0,4 mm.

Am Kegelstumpfboden 11 ist ein radial abstehender, umlaufender Anlagebund angebracht mit einem Bundhöhe L5 von 0,4 mm und einer Bundbreite von 2,5 mm, so dass sich im Bereich des Anlagebunds 12 der Gesamtdurchmesser d2 mit 4,3 mm ergibt.

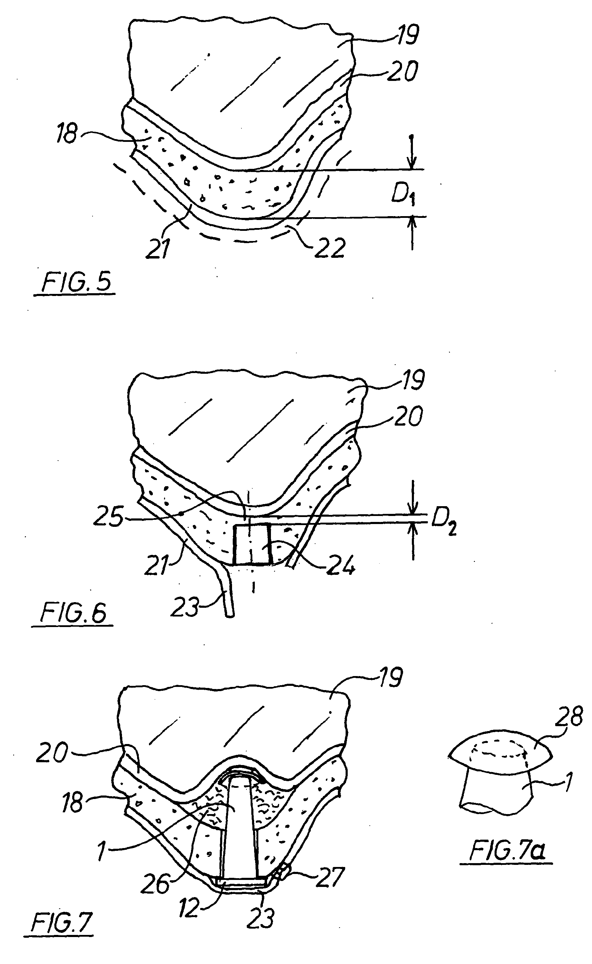

Der Kegelstumpfboden mit einem Durchmesser d1 von 3,8 mm führt in Verbindung mit dem Kegelwinkel α zu einem Durchmesser d3 von 2,8 mm an der Kegeloberseite 13. Dort ist eine zentrale Kleberaufnahmemulde 14 gezeigt, wo gegebenenfalls eine schirmförmige Stützscheibe 28 (sh. Fig. 7a) angeklebt und/oder verrastet werden kann.

Am Übergang der Kegeloberseite 13 zum Kegelmantel 4 sind gerundete Kannten 15 ausgebildet.

Im Kegelstumpfboden 11 ist zentral ein axial ausgerichteter Inbusschlüsselansatz 16 eingelassen.

Die Oberfläche 17 des Stützkegelstumpfs 1 ist glatt, gegebenenfalls teflonbeschichtet ausgeführt. Der Rauhigkeitsbereich soll im Bereich von maschiniert (entsprechend fein abgedreht) bis poliert liegen. Als Material für den Stützkegelstumpf können je nach den Gegebenheiten Titan und/oder Edelstahl und/oder Edelmetall und/oder Keramikmaterial ggf. auch stabile und verträgliche Kunststoffe verwendet werden.

In den Fig. 5 bis 9 sind die Anwendung des Stützkegelstumpfs 1 und des Schraubimplantats 2 anhand schematischer Darstellungen erläutert:

Fig. 5 zeigt einen Querschnitt durch einen Oberkieferknochen 18 in einem Seitenzahnbereich an einer vorgesehenen Implantatposition. Über dem Oberkieferknochen 18 liegt die Kieferhöhle 19, die nach unten am Sinusboden durch die am Knochen 18 anliegende Sinusmembran 20 (Kieferhöhlenschleimhaut oder Schneidersche Membran) begrenzt ist. Der Oberkieferknochen 18 besteht in den äußeren Bereichen aus Kortikalisanteilen und kann je nach Knochenstärke im inneren Bereich mehr oder weniger Spongiosadicke aufweisen. Zudem ist die für die vorliegende Technik benötigte Knochenhaut 21 eingezeichnet, die den Oberkieferknochen von unten her abdeckt. Weiter ist nur strichliert angedeutet eine Weichgewebeschicht 22 eingezeichnet. Fig. 5 stellt die Ausgangssituation vor einer lmplantierung dar, wobei die dazu zur Verfügung stehende Knochendicke D1 beispielsweise durch eine Röntgenuntersuchung festzustellen ist. Ist das vorgefundene Knochenangebot relativ klein, insbesondere die Knochenstärke etwa kleiner als 6 mm bis ca. 0,5 mm, ist die weiter dargestellte Vorgehensweise angezeigt.

Gemäß Fig. 6 wird die Knochenhaut 21 etwas seitlich der Implantatstelle mit einem Hautlappen 23 (Mucoperiost-Lappen) abgelöst. Anschließend wird eine Bohrung 24 etwa im Durchmesser des Kegelstumpfbodens 11 in den Knochen 18 eingebracht, so weit, dass darüber ein Knochenblättchen der Dicke D2 aus Compacta stehen bleibt (Fig. 6).

Anschließend wird mittels Osteotomtechnik das Knochenblättchen 25 frakturiert und die Sinusmembranelevation durchgeführt. Dann wird der Stützkegelstumpf 1 in die Bohrung 24 eingesetzt und vollständig bis zum Anlagebund 12 eingeführt. Dabei wird die elevierte Sinusmembran abgestützt und es entsteht zwischen der elevierten Sinusmembran 20, dem darunter liegenden Knochen 18 und um den oberen Bereich des Stützkegelstumpfs ein Volumen 26, welches sich insbesondere mit Blut füllt. Dieses Volumen steht dann für die gewünschte Knochenbildung zur Verfügung. Der Hautlappen 23 wird zur Lagesicherung des Stützkegelstumpfs 1 in der Bohrung 24 über den Kegelstumpfboden geschlagen und mittels einer Naht 27 fixiert.

Mit einer neuen Technik kann die Bohrung ggf. auch mit einer piezoelektrischen Methode eingebracht werden, wobei der Bohrvorgang direkt bis zur Sinusmembran ohne diese zu beschädigen möglich ist.

Der Stützkegelstumpf 1 kann in der nach Fig. 1 dargestellten Ausführung verwendet werden, wobei die relativ große Kegeloberseite 13 und die Kantenrundungen an deren Seitenbereichen einer Verletzung und einem Durchstoßen der Sinusmembran 20 entgegenwirken. In Fig. 7 und in der vergrößerten Darstellung nach Fig. 7a ist in einer weiteren Ausgestaltung an der Kegeloberseite 13 eine schirmförmig die Kegelstumpfoberseite radial überragende, elastische Stützscheibe 28 durch Kleben und/oder mittels einer Rastverbindung befestigt. Eine solche elastische Stützscheibe 28 kann die Anlagefläche bei der Sinusmembranelevation vergrößern und damit ungünstige punktuelle Belastungen der Sinusmembran 20 reduzieren. Dadurch ist beispielsweise auch die Möglichkeit gegeben, den Kegelstumpf im oberen Bereich mit relativ geringem Durchmesser auszuführen, wobei auch die Kantenrundungen zur Mantelfläche hin weniger kritisch sind, da die abstützende Rundung bei der Sinusmembranelevation durch die Schirmgestalt der Stützscheibe 28 gebildet ist. Diese Stützscheibe 28 soll aus einer resorbierbaren Membran hergestellt sein, so dass sie spätestens bei der Entfernung des Stützkegelstumpfs 1 nicht mehr relevant ist.

Der Stützkegelstumpf 1 kann auch über seine Länge nach oben an einer oder mehreren Stufen eingezogen sein, wobei es aber wesenlich ist, dass jeweils die Rotationskörperform und Kegelform gegeben ist, um eine problemlose Herausnahme des Stützkegelstumpfs zu gewährleisten.

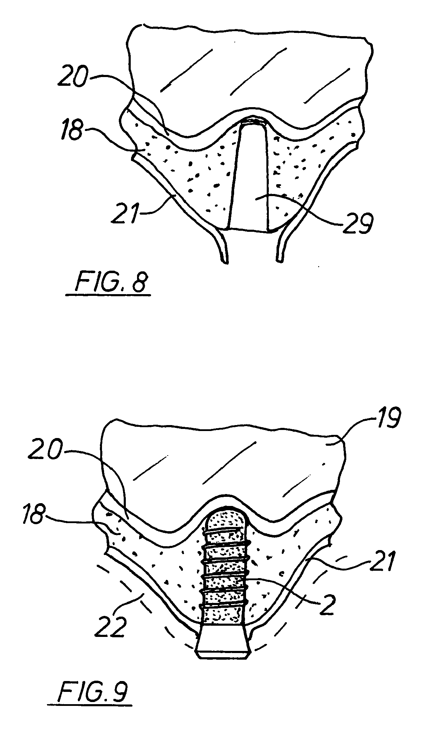

Nach ca. 5 Monaten hat sich im Volumen 26 der Kieferknochen 18 bis unter die elevierte Sinusmembran 20 aufgebaut, wie in Fig. 8 dargestellt. Nun kann der Stützkegelstumpf 1 herausgenommen werden, wozu die Knochenhaut 21 über dem Kegelstumpfboden 11 aufgetrennt wird. Durch Aufbringen eines ruckartigen Losbrechdrehmoments mittels eines Inbusschlüssels wird der Stützkegelstumpf 1 gelöst und herausgenommen, so dass die in Fig. 8 ersichtliche Knochenöffnung als Pilotbohrung 29 für das Schraubimplantat 2 geschaffen ist. Diese Pilotbohrung 22 wird noch auf den erforderlichen Durchmesser nachgearbeitet und anschließend wird das Implantat 2 in üblicher Weise eingesetzt, wie aus Fig. 9 ersichtlich.

Der Stützkegelstumpf 1 ist nach seinem temporären Einsatz ein Wegwerfteil, während das Implantat 2 für den Langzeitverbleib im Kieferknochen 18 bestimmt ist.

## Patentansprüche

1. Erzeugnis zur Anwendung bei einer den Knochenaufbau an einem Oberkieferknochen fördernden Sinusmembranelevation zur Vorbereitung der Insertion eines Dentalimplantats,
**dadurch gekennzeichnet,**
**dass** das Erzeugnis ein Sinusmembranelevation-Stützkegelstumpf (1) als gerader Kreiskegelstumpf ist, zur temporären Abstützung der elevierten Sinusmembran (20), während der Zeit des unter der elevierten Sinusmembran (20) und um den Stützkegelstumpf (1) herum erfolgenden Knochenaufbaus wobei
der Stützkegelstumpf (1) eine Länge (L1) oder Länge mit geringem Übermaß (L4) entsprechend der Knocheninstertionstiefe (L2) eines Implantats (2) aufweist,
der Kegelstumpfboden (11) einen Durchmesser (d1) oder Durchmesser mit geringem Untermaß entsprechend dem Einsatzdurchmesser (d4) eines Implantats (2) aufweist,
der Kegelwinkel α zwischen der Kegelhöhe (3) und dem Kegelmantel (4) in einem Bereich zwischen 0,3° und 7°, bevorzugt zwischen 0,5° und 2° liegt,
die Kegelstumpfoberseite (13) gerundete Kanten (15) am Übergang zum Kegelmantel (4) aufweist, und
die Kegelstumpfoberfläche (4) glatt in einem Rauhigkeitsbereich von maschiniert bis poliert ausgeführt ist.

2. Erzeugnis nach Anspruch 1, **dadurch gekennzeichnet, dass** am Kegelstumpfboden (11) ein radial abstehender, umlaufender Anlagebund (12) angebracht ist mit einer radialen Bundbreite zwischen 0,5 mm und 5 mm, bevorzugt zwischen 2 mm und 3 mm und einer Bundhöhe (L5) zwischen 0,2 mm und 1 mm, bevorzugt zwischen 0,3 mm und 0,5 mm.

3. Erzeugnis nach Anspruch 1 oder Anspruch 2, **dadurch gekennzeichnet, dass** zentral im Kegelstumpfboden (11) ein axial ausgerichteter Werkzeugansatz, bevorzugt ein Inbusschlüsselansatz (16) eingelassen ist.

4. Erzeugnis nach einem der Ansprüche 1 bis 3, **dadurch gekennzeichnet, dass** an der Kegelstumpfoberseite (13) eine diese Oberseite schirmförmig radial überragende, elastische Stützscheibe (28) angeklebt, gegebenenfalls an einer zentralen Kleberaufnahmemulde (14) angeklebt, und/oder mittels einer Rastverbindung befestig ist, und
dass die Stützscheibe aus einer resorbierbaren Membran hergestellt ist.

5. Erzeugnis nach Anspruch 4, **dadurch gekennzeichnet, dass** der Stützkegelstumpf (1) aus Titan und/oder Edelstahl und/oder Keramikmaterial hergestellt ist und/oder die Oberfläche (4) zumindest teilweise teflonbeschichtet ist.

6. Erzeugnis zur Anwendung bei einer den Knochenaufbau an einem Oberkieferknochen fördernden Sinusmembranelevation zur Vorbereitung und zur Insertion eines Dentalimplantats,
**dadurch gekennzeichnet,**
**dass** das Erzeugnis ein Set ist bestehend aus einem Implantat (2) als Schraub- oder Steckimplantat mit einer vorgegebenen Knocheninsertionstiefe (L2) sowie einem vorgegebenen Einsatzdurchmesser (d4) und bestehend aus einem Sinusmembranelevation-Stützkegelstumpf (1) als geraden Kreiskegelstumpf, zur temporären Abstützung der elevierten Sinusmembran (20), während der Zeit des unter der elevierten Sinusmembran (20) und um den Stützkegelstumpf (1) herum erfolgenden Knochenaufbaus bis zur Insertion des Dentalimplantats (2), wobei
der Stützkegelstumpf (1) eine Länge (L1) oder Länge mit geringem Übermaß (L4) entsprechend der Knocheninsertionstiefe (L2) des Implantats (2) aufweist,
der Stützkegelstumpfboden (11) einen Durchmesser (d1) oder Durchmesser mit geringem Untermaß entsprechend dem Einsatzdurchmesser (d4) des Implantats (2) aufweist,
der Kegelwinkel α zwischen der Kegelhöhe (3) und dem Kegelmantel (4) in einem Bereich zwischen 0,3° und 7°, bevorzugt zwischen 0,5° und 2° liegt,
die Kegelstumpfoberseite (13) gerundete Kanten (15) am Übergang zum Kegelmantel (4) aufweist, und
die Kegelstumpfoberfläche (4) glatt in einem Rauhigkeitsbereich von maschiniert bis poliert ausgeführt ist.

7. Erzeugnis als Set nach Anspruch 6, **dadurch gekennzeichnet,**
**dass** am Kegelstumpfboden (11) ein radial abstehender, umlaufender Anlagebund (12) angebracht ist mit einer radialen Bundbreite zwischen 0,5 mm und 5 mm, bevorzugt zwischen 2 mm und 3 mm und einer Bundhöhe (L5) zwischen 0,2 mm und 1 mm, bevorzugt zwischen 0,3 mm und 0,5 mm, und
**dass** zentral im Kegelstumpfboden (11) ein axial ausgerichteter Werkzeugansatz, bevorzugt ein Inbusschlüsselansatz (16) eingelassen ist.

8. Erzeugnis als Set nach einem der Ansprüche 6 oder 7, **dadurch gekennzeichnet,**
**dass** an der Kegelstumpfoberseite (13) eine diese Oberseite schirmförmig radial überragende Stützscheibe (28) gegebenenfalls an einer zentralen Kleberaufnahmemulde (14) angeklebt und/oder mittels einer Rastverbindung befestigt ist, und
**dass** die Stützscheibe (28) aus einer resorbierbaren Membran hergestellt ist.

9. Erzeugnis als Set nach einem der Ansprüche 6 bis 8, **dadurch gekennzeichnet, dass** das Implantat als Schraubimplantat (2) in der Art eines Primärteils ausgeführt ist, wobei
der Bereich, der für die Knocheninsertion bestimmt ist (L2) eine Zylinderform (5) aufweist, mit einem selbstschneidenden Gewindegang (6) mit einer mikrostrukturierten Oberfläche und mit einer halbkugelförmigen Zylinderendabrundung (7), und
der daran anschließende Bereich (9), der als Knochenüberstand bestimmt ist, mit glatter Oberfläche konisch erweitert ist mit einem zentralen Innengewinde (10) für die Befestigung eines einschraubbaren Sekundärteils als Träger für eine Zahnkrone oder eine andere Suprakonstruktion.

10. Erzeugnis als Set nach einem der Ansprüche 1 bis 9, **dadurch gekennzeichnet, dass** der Sinusmembranelevation-Stützkegelstumpf (1) aus dem Set als Wegwerfteil konzipiert ist, welches nach seinem temporären Einsatz entsorgt wird, während das Implantat (2) aus dem Set für den Langzeitverbleib im Kieferknochen bestimmt ist.
